# EUROPEAN PATENT APPLICATION

(11) **EP 4 216 039 A1**
(43) Date of publication of application: **26.07.2023**
(21) Application number: 22216726.4
(22) Date of filing: 27.12.2022
(51) Int. Cl.: G06F 3/023, G06F 3/01

(54) **CHARACTER INPUT DEVICE, CHARACTER INPUT METHOD, AND CHARACTER INPUT PROGRAM**

(30) Priority: 19.01.2022 JP 2022006094
(71) Applicant: OMRON Corporation, Kyoto 600-8530 (JP)
(72) Inventor: NONOMURA, Yui, Muko-shi, 617-0002 (JP)
(74) Representative: Horn Kleimann Waitzhofer Patentanwälte PartG mbB

(57) **Abstract**

Provided is a technology that enables efficient input of character strings that are estimated to follow one another or be linked. A character input device includes a conversion candidate acquisition unit that acquires one or more conversion candidates for a character string input to the character input device, a detector that detects selection of a conversion candidate acquired by the conversion candidate acquisition unit, a confirmation unit that confirms, as a first character string of the input character string, the conversion candidate whose selection is detected by the detector, and a follow-up candidate acquisition unit that acquires one or more follow-up candidates that follow the first character string confirmed by the confirmation unit. The follow-up candidate acquisition unit acquires, as the one or more follow-up candidates, a character string or strings representing a state of an event related to the confirmed first character string. The detector receives selection of a follow-up candidate acquired by the follow-up candidate acquisition unit. The confirmation unit confirms, as a new second character string that has continuity with the first character string last confirmed, the follow-up candidate whose selection is received by the detector.

## Description

### CROSS-REFERENCES TO RELATED APPLICATIONS

This application claims priority to Japanese Patent Application No. 2022-006094 filed January 19, 2022, the entire contents of which are incorporated herein by reference.

### FIELD

The present invention relates to a technology for supporting character input.

### BACKGROUND

The present invention deals with the input of scripts in which there is no one-to-one correspondence between individual characters and keys on a keyboard. Examples of such scripts are Japanese, Chinese and Korean, but there is no limitation to these. It is noted that all examples in description application are in Japanese. Let's explain this lack of one-to-one correspondence in more detail:

To input an English word on a keyboard, the individual letters of that word are pressed. For example, to input the word "today", it is sufficient to press the keys t, o, d, a and y in that order. Majuscules can be input by additionally pressing the shift key, but the principle is the same. Accordingly, there is a one-to-one correspondence between input characters (keys on a keyboard, such as t - o - d - a - y) and a resulting word (such as "today"), and a word can be input by simply entering its letters.

By contrast, it is not so straightforward to input a Japanese word. For example, the Japanese word 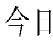 (which is read "kyou" and means "today") consists of two different Chinese characters ( 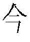 and 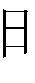 ), and as there are thousands of Chinese characters in use in the Japanese language, it will be immediately apparent that there is no keyboard with Chinese characters that allows input of Japanese words such as 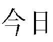 . Rather, input of Japanese words is typically performed with Roman letters, i.e., the alphabet.

It should be noted that although the expression "Chinese characters" is used, the present explanations relate to Japanese character input, not Chinese (although the principles are the same in Chinese). Japanese script uses Chinese characters, which are also known as "kanjis" or "kanji characters". In order to avoid confusion, the expression "kanji characters" is used in the following explanations.

To input the above-noted word 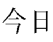 , the letters k, y, o and u are pressed in that order on a keyboard (e.g., after setting the system to "Japanese language input"). However, that is not enough. Japanese has many homophones, i.e., words (or kanji characters) that sound the same but have different meanings. To take the above example, the word 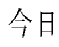 has the reading (sound) "kyou", but the following kanji characters also have the reading "kyou": 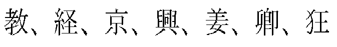 etc.

Accordingly, it is not sufficient to simply input k, y, o, u. After inputting these letters, the appropriate kanji character (or kanji character combination) must be selected from a list of conversion candidates. For example, if the letters k, y, o, and u are entered on a keyboard in Japanese language input mode, then a list of the conversion candidates 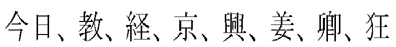 etc., is displayed. The user then selects the appropriate conversion candidate and presses a confirmation key (which may be the "Return" key, for example) in order to confirm (finalize) the input.

Now, when inputting Japanese on a keyboard, the input before the finalization is typically rendered in hiragana script. The hiragana script is a phonetic script of syllables, with which any Japanese text can be represented. For example, the word 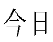 (kyou) can be represented by the hiragana characters 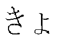 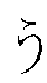 . It should be noted that there is a one-to-one correspondence between hiragana characters and the corresponding roman letters (but not between kanji characters and roman letters).

Various methods have been devised that involve a user inputting a date or a time using an electronic device such as a smartphone. For example, JP 2002-304390A describes a configuration in which the current time "10:52" is displayed (output) as a conversion candidate when the user inputs "now". The user is able to confirm the current time as an input character string, by selecting "10:52" displayed as a conversion candidate.

JP 2002-304390Ais an example of background art.

An example will now be described in which the user inputs the Japanese sentence " 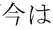 10 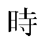 52 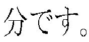 " ("ima wa 10:52 desu."/"Now is 10:52"), using the above configuration. In this case, the user needs to input the characters in steps. Specifically, the user inputs " 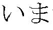 " ("ima") in Japanese using hiragana characters as a first step, and selects the character string "4"" ("ima"), which is the kanji character (Chinese character) for "now", from among the conversion candidates. Next, the user inputs the particle " 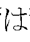 " ("wa") in hiragana. Furthermore, as a second step, the user inputs " 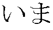 " in hiragana and selects the character string "10:52" from among the conversion candidates.

In this way, with the configurations described in JP 2002-304390A and the like, if the user wants to input the state (current time) of a certain event (in the above example, time) when inputting a character string, he or she has to repeatedly input the same character string (in the above example, " 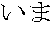 ") twice. This makes the input operation troublesome for the user.

Accordingly, an object of the present invention is to provide a technology that enables efficient input of character strings that are estimated to follow one another or be linked.

### SUMMARY

First, terms that are used in the present invention will be defined. Follow-up estimation is a method of estimating character strings that are linked to (follow) input character strings. Specifically, when the kanji character " 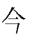 " ("ima"/"now") and the particle " 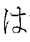 " ("wa") are input, the character string "10:52" indicating the current time, for example, is estimated to follow the character strings " 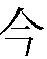 " and " 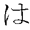 ". In this way, follow-up estimation is a method of estimating specific values, character strings (words) and the like for character strings input by the user. Also, candidates estimated to follow the character strings " 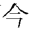 " and " 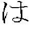 ", such as the character strings "10:52" and "10:52 a.m." are referred to as "follow-up candidates". These follow-up candidates are included as predictive conversion candidates.

Note that follow-up candidates are acquired by using "follow-up predictive conversion" that involves acquiring known predictive conversion candidates. In "follow-up predictive conversion", character strings that are predicted to be linked to (follow) input character strings (words), that is, character strings indicating the state of an event related to input character strings, are presented as predictive conversion candidates.

A character input device of this invention is configured as shown below in order to achieve the above object.

The character input device includes a conversion candidate acquisition unit configured to acquire one or more conversion candidates for a character string that is input to the character input device, a detector configured to detect selection of a conversion candidate acquired by the conversion candidate acquisition unit, a confirmation unit configured to confirm, as a first character string of the input character string, the conversion candidate whose selection is detected by the detector, and a follow-up candidate acquisition unit configured to acquire one or more follow-up candidates that follow the first character string confirmed by the confirmation unit.

The follow-up candidate acquisition unit acquires, as the one or more follow-up candidates, a character string or strings representing a state of an event related to the confirmed first character string. The detector receives selection of a follow-up candidate acquired by the follow-up candidate acquisition unit. The confirmation unit confirms, as a new second character string that has continuity with the first character string last confirmed, the follow-up candidate whose selection is received by the detector.

With this configuration, a follow-up candidate for a conversion candidate can be acquired. The user is able to easily input text by using this follow-up candidate, and user friendliness is improved.

Also, for example, the follow-up candidate acquisition unit may search for and acquire one or more follow-up candidates that respectively follow the one or more conversion candidates acquired by the conversion candidate acquisition unit.

Also, for example, the follow-up candidate acquisition unit may search for and acquire, for the conversion candidate confirmed as the first character string or for the follow-up candidate confirmed as the second character string, one or more follow-up candidates that follow the first character string or the second character string.

The follow-up candidate acquisition unit may acquire, for each conversion candidate acquired by the conversion candidate acquisition unit, one or more follow-up candidates to be acquired in a case where selection of the conversion candidate is detected by the detector.

Also, for example, the follow-up candidate acquisition unit may acquire, for each follow-up candidate currently acquired, one or more follow-up candidates to be acquired in a case where selection of the follow-up candidate is received by the detector.

According to this invention, a technology can be provided that enables efficient input of character strings that are estimated to follow one another or be linked.

### BRIEF DESCRIPTION OF THE DRAWINGS

FIG. 1 is an image diagram illustrating character input with a character input device in an application example.
FIG. 2 is a block diagram showing the configuration of the character input device in this example.
FIG. 3A is an image diagram illustrating character input with the character input device in this example.
FIG. 3B is an image diagram showing the configuration of a conventional character input device.
FIG. 4 is a flowchart showing the flow of processing by the character input device in an operation example.
FIG. 5 is an image diagram illustrating character input with a character input device in a first modification.
FIG. 6 is a flowchart showing the flow of processing by the character input device in the first modification.

### DETAILED DESCRIPTION

Hereinafter, embodiments for carrying out the present invention will be described with reference to the diagrams.

### 1. Application Example

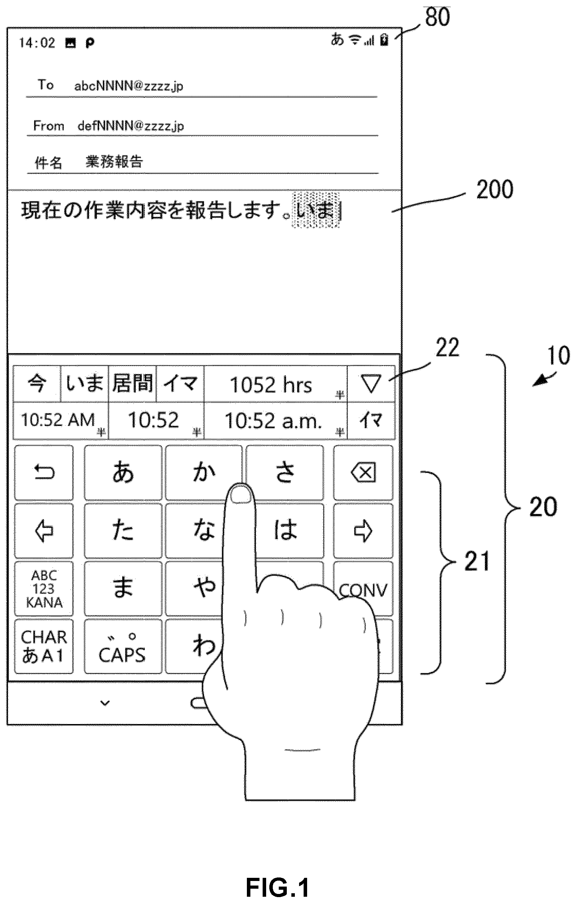

FIG. 1 is an image diagram illustrating character input with a character input device 10. A user writes an email using the character input device 10. The user inputs character strings to an email application.

The character input device 10 is installed in an electronic device such as a smartphone, for example. Note that this electronic device is not limited to a smartphone, and may be any device that allows a user to input text, such as a tablet or a personal computer.

A detailed description will now be given using an example of character input by a user. A smartphone 80 is equipped with a touch panel. The user starts an application (hereinafter referred to as an app) that is installed on the smartphone 80.

The user starts an email app, for example. The user inputs a character string to an input field 200. In this example, description will be given using an email app, but the type of app is not limited, and any app having a function that enables text to be input may be employed.

The character input device 10 receives a result of the user operating the touch panel of the smartphone 80. For example, the user starts the email app in order to write an email and inputs text. The character input device 10 detects an operation for starting character input by the user. The character input device 10 starts a display 20 (character input unit 21, candidate display 22) in response to detecting this operation for performing character input.

The user operates the character input unit 21 and inputs text. More specifically, the user inputs the Japanese sentence " 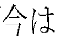 10 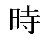 52 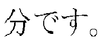 " ("ima wa 10:52 desu."/"Now is 10:52"), in order to input the current time.

First, the user inputs the character string " 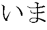 " ("ima") to the input field 200. The character input device 10 displays "4"" (kanji character for "ima"/"now"), " 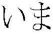 " ("ima" in hiragana characters), " 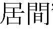 " ("ima"/"living room"), " 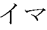 " ("ima" in katakana characters) and the like as conversion candidates on the candidate display 22.

The character input device 10 estimates whether there is a character string having one or more follow-up candidates among the conversion candidates. At this time, the character input device 10 estimates that the character string " 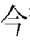 " is a character string for inputting the current state. Furthermore, the character input device 10 acquires the current time, which is a follow-up candidate corresponding to the character string " 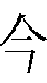 ". For example, "1052 hrs", "10:52 AM", "10:52" and "10:52 a.m." are acquired as follow-up candidates.

The user selects the character string " 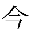 " (hereinafter referred to as a first character string) from among the conversion candidates and confirms the selection. Furthermore, the user inputs the particle " 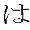 " ("wa"). The character input device 10 displays "1052 hrs", "10:52 AM", "10:52", "10:52 a.m." and the like as follow-up candidates for the confirmed first character string on the candidate display 22. That is, it is possible for the user to select a follow-up candidate (in this case, "10:52") that is included in the predictive conversion candidates. Hereinafter, this selected follow-up candidate "10:52" will be referred to as a second character string.

Adopting such a configuration enables the user to acquire a follow-up candidate for the first character string " 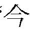 ". The user is able to select the second character string "10:52" from among the follow-up candidates, and can easily input text with only a few steps. That is, the troublesome nature of character input is resolved, enabling the user to input text efficiently, and improving user friendliness.

### 2. Configuration Example

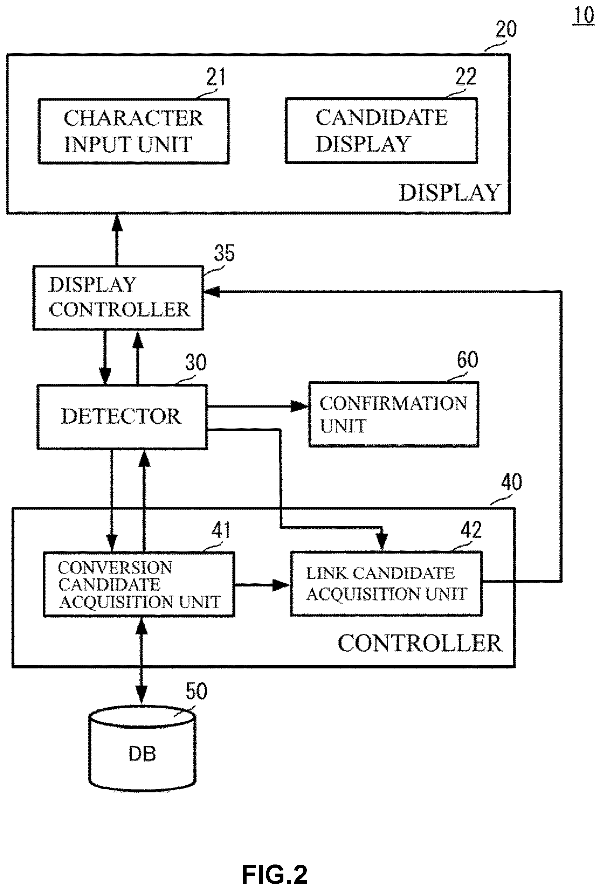

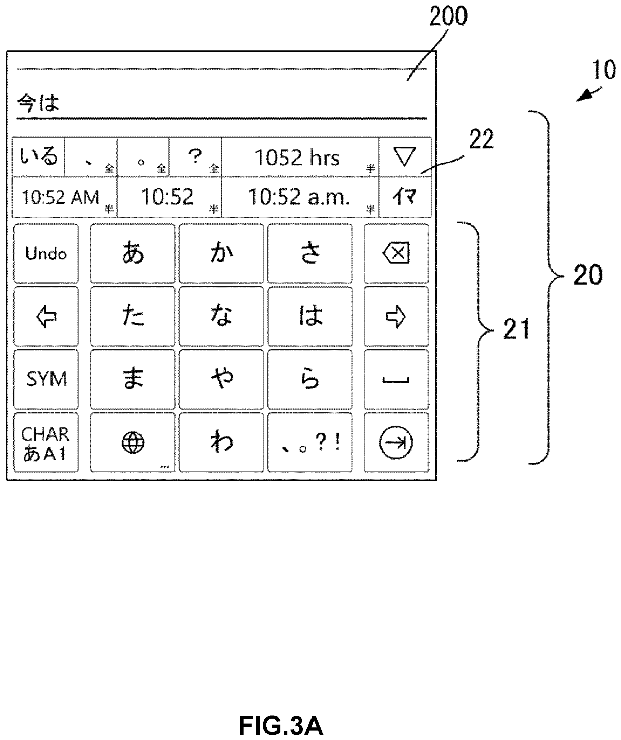

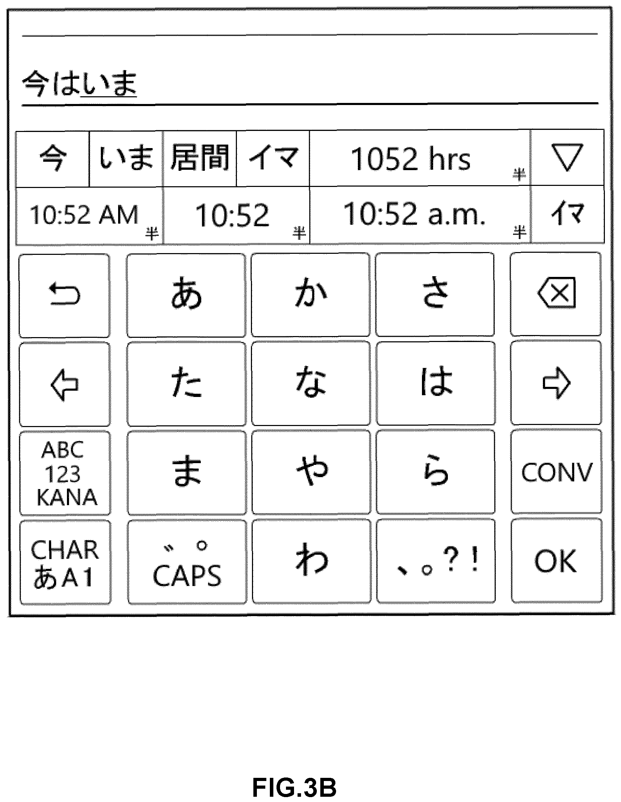

FIG. 2 is a block diagram showing the configuration of the character input device 10 in this example. FIGS. 3A and 3B are image diagrams illustrating character input using the smartphone 80 to which the character input device 10 in this example is applied. Note that the character input device 10 is not limited to application to a smartphone, but may be applied to any electronic device that enables character input.

As shown in FIG. 2, the character input device 10 includes the display 20, a detector 30, a display controller 35, a controller 40, a dictionary database 50, and a confirmation unit 60.

As described above, the display 20 includes the character input unit 21 and the candidate display 22. For example, as shown in FIG. 1, the character input unit 21 and the candidate display 22 are disposed on a screen of the smartphone 80. The character input unit 21 displays various keys for character input. The candidate display 22 displays conversion candidates acquired by a method described later and conversion candidates that have been narrowed down. Note that the character input unit 21 is a software keyboard, for example.

The smartphone 80 is equipped with a touch panel. This touch panel detects operations by the user. More specifically, the touch panel detects operation of the input field 200 of the email app and operation of the character input unit 21 and the candidate display 22 provided in the display 20. Operation detection includes, for example, detection of operation position, duration of operation, and temporal change in operation position. The results of operation detection are output to the detector 30. The detector 30 outputs these results to the display controller 35, the controller 40 and the confirmation unit 60, according to the result input from the touch panel.

The controller 40 includes a conversion candidate acquisition unit 41 and a follow-up candidate acquisition unit 42. Note that the controller 40 is constituted by a hardware CPU, a memory, and other electronic circuits. The hardware CPU operates as the conversion candidate acquisition unit 41 and the follow-up candidate acquisition unit 42, by executing a character input program according to this invention. Also, the memory has a region for unpacking the character input program according to this invention and a region for temporarily storing data generated at times such as during execution of the character input program. The controller 40 may be an LSI that integrates a hardware CPU, memory and the like. Also, the hardware CPU is a computer that executes a character input method according to this invention.

In the dictionary database 50, the character strings, readings, parts of speech and the like of words are registered in association with each other for each word. The dictionary database 50 is used for conversion and prediction of input text (readings) into associated character strings (conversion character strings). Note that, in this example, the dictionary database 50 is embedded in the character input device 10, but may also be disposed on a cloud. Also, the dictionary database 50 may be divided into two dictionaries, namely, a system dictionary and a user dictionary.

The conversion candidate acquisition unit 41 acquires the character string input to the input field 200. The conversion candidate acquisition unit 41 searches the dictionary database 50. The conversion candidate acquisition unit 41 acquires conversion candidates as a result of searching the dictionary database 50, and outputs the conversion candidates to the follow-up candidate acquisition unit 42. The follow-up candidate acquisition unit 42 estimates whether there is a character string having one or more follow-up candidates among the conversion candidates. The follow-up candidate acquisition unit 42 acquires follow-up candidates from the Internet or the like. The follow-up candidate acquisition unit 42 temporarily saves these acquired follow-up candidates to cache or the like, for example.

Next, the configuration of the character input device 10 will be described in detail using FIGS. 1, 2, and 3A. As shown in FIGS. 1, 2, and 3A, the user starts the email app on the smartphone 80. In the example shown below, the user inputs the Japanese sentence " 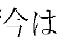 10 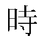 52 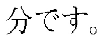 " ("ima wa 10:52 desu."/"Now is 10:52").

The user activates the input field 200 of the email app. The detector 30 detects that the input field 200 has been activated, and notifies the display controller 35. The display controller 35 displays the character input unit 21 and the candidate display 22.

The user inputs the character string " 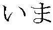 " ("ima") using the character input unit 21. The detector 30 detects that the character string " 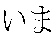 " has been input, and outputs the character string " 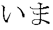 " to the conversion candidate acquisition unit 41.

The conversion candidate acquisition unit 41 retrieves conversion candidates for the character string " 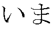 " from the dictionary database 50. The conversion candidate acquisition unit 41 acquires " 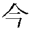 " ("ima"/"now" in kanji), " 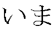 " ("ima" in hiragana), " 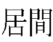 " ("ima"/"living room" in kanji), " 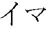 " ("ima" in katakana), "1052 hrs", "10:52 AM", "10:52", "10:52 a.m." and the like as conversion candidates corresponding to the character string " 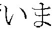 ". Note that these conversion candidates include follow-up candidates for the character string " 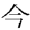 ". A detailed description will be given later.

The conversion candidate acquisition unit 41 outputs these conversion candidates to the detector 30 and the follow-up candidate acquisition unit 42. The detector 30 outputs the conversion candidates to the display controller 35. The display controller 35 displays the conversion candidates on the candidate display 22.

The follow-up candidate acquisition unit 42 estimates whether there is a character string having one or more follow-up candidates among the conversion candidates, using "follow-up predictive conversion" for acquiring known predictive conversion candidates. Note that in the case where the conversion candidates are constituted by a plurality of words or character strings or by a sentence, the follow-up candidate acquisition unit 42 estimates whether there is a character string (word) having one or more follow-up candidates by executing morphological analysis.

At this time, the follow-up candidate acquisition unit 42 estimates that the character string " 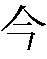 " included in the conversion candidates has one or more follow-up candidates, and that the current time is linked to (and may follow) this character string " 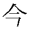 ". The follow-up candidate acquisition unit 42 outputs the character string " 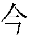 " resulting from this estimation to the follow-up candidate acquisition unit 42.

The follow-up candidate acquisition unit 42 searches for follow-up candidates for the character string " 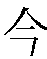 ". For example, since the character string " 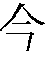 " is a character string indicating time, the follow-up candidate acquisition unit 42 acquires the time at that moment (current time). The acquired time may be the system time of the smartphone 80, the time acquired from an Internet server, or the like.

The follow-up candidate acquisition unit 42 acquires "1052 hrs", "10:52 AM", "10:52", "10:52 a.m." and the like as follow-up candidates for the time at that moment. The follow-up candidate acquisition unit 42 temporarily saves the follow-up candidates to cache or the like, for example.

The user selects " 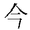 " as the first character string and confirms the selection. The detector 30 notifies the confirmation unit 60 and the follow-up candidate acquisition unit 42 that "4"" was selected as the first character string. The confirmation unit 60 outputs the first character string "4"" in the input field 200 as a confirmed character string. Next, the user inputs the character string " 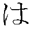 " that follows the first character string " 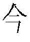 ".

The follow-up candidate acquisition unit 42 recognizes that the first character string " 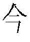 " has been confirmed. The follow-up candidate acquisition unit 42 acquires the temporarily saved follow-up candidates of the first character string " 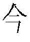 ", and outputs these follow-up candidates to the display controller 35.

The display controller 35 displays the follow-up candidates on the candidate display 22. The user selects "10:52" as the second character string from among the follow-up candidates displayed on the candidate display 22.

The detector 30 detects that "10:52" was selected as the second character string, and notifies the confirmation unit 60 and the follow-up candidate acquisition unit 42. The confirmation unit 60 outputs the second character string "10:52" in the input field 200 as a confirmed character string. The follow-up candidate acquisition unit 42 deletes the temporarily saved follow-up candidates. Next, the user inputs the remaining desired character string " 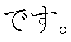 ", which is the verb of the Japanese sentence " 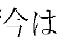 10 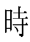 52 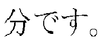 " ("ima wa 10:52 desu.") and corresponds to "is" in the equivalent English sentence "Now is 10:52".

Here, the configuration of FIG. 3A according to the present invention and the conventional configuration of FIG. 3B which show examples of character input will be compared. In both FIG. 3A and FIG. 3B, as a first step, the user inputs the character string " 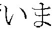 " ("ima"). The user selects "4^" ("ima"/"now") as the first character string from among the conversion candidates. Next, the user inputs the character string " 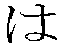 " (particle "wa").

In FIG. 3B, as a second step, the user inputs the character string " 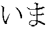 " again. As a result, the follow-up candidates "1052 hrs", "10:52 AM", "10:52", "10:52 a.m." and the like are displayed in the conversion candidates. The user selects "10:52" as the second character string. The user then inputs the remaining desired character string " 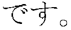 ".

In the configuration of FIG. 3B, the user needs to perform the character input of the second step in order to acquire follow-up candidates for the first character string " 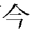 ". On the other hand, with the configuration of the present invention in FIG. 3A, the character input of the second step in FIG. 3B can be omitted. That is, it becomes possible to input desired character strings with fewer steps, and user friendliness and operability are improved.

### 3. Operation Example

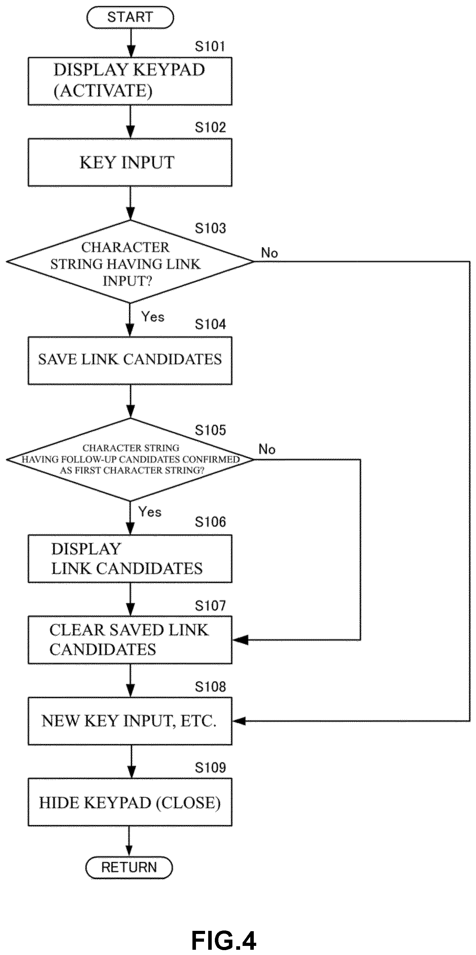

FIG. 4 is a flowchart showing the flow of processing by the character input device 10 in an operation example. The flow of processing by the character input device 10 will be described using FIGS. 1, 2, 3A, and 4.

The user starts the email app that is installed on the smartphone 80. The user taps the input field 200. The detector 30 notifies the display controller 35 that the input field 200 has been activated, so as to start the display 20. The display 20 displays the character input unit 21 and the candidate display 22 (S101).

The input field 200 receives input of a character string by the user. The user inputs the character string " 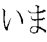 ", for example, using the character input unit 21 (S102).

The conversion candidate acquisition unit 41 searches the dictionary database 50 for the character string " 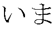 ", and retrieves conversion candidates. The conversion candidate acquisition unit 41 outputs the conversion candidates to the detector 30 and the follow-up candidate acquisition unit 42. The detector 30 outputs the conversion candidates to the display controller 35. The display controller 35 displays the conversion candidates on the candidate display 22. The follow-up candidate acquisition unit 42 estimates whether there is a character string having one or more follow-up candidates among the conversion candidates (S103).

If it is determined that the character string " 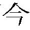 " has one or more follow-up candidates (S103: Yes), the follow-up candidate acquisition unit 42 searches for follow-up candidates for the character string " 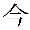 ". In this case, the follow-up candidate acquisition unit 42 acquires the follow-up candidates "1052 hrs", "10:52 AM", "10:52", "10:52 a.m." and the like indicating the current time. The follow-up candidate acquisition unit 42 temporarily saves these follow-up candidates to cache or the like (S104).

The user selects a desired character string as the first character string from among the conversion candidates displayed on the candidate display 22. The detector 30 detects whether "4"" having one or more follow-up candidates was selected as the first character string (S105). If it is detected that " 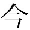 " was selected (confirmed) as the first character string (S105: Yes), the detector 30 notifies the follow-up candidate acquisition unit 42 and the confirmation unit 60. The confirmation unit 60 outputs the first character string " 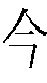 " in the input field 200 as a confirmed character string. Furthermore, the user inputs the character string " 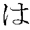 " that follows the first character string " 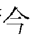 ".

The follow-up candidate acquisition unit 42 acquires the temporarily saved follow-up candidates of the first character string " 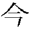 ", and outputs these follow-up candidates to the display controller 35. The display controller 35 displays the follow-up candidates on the candidate display 22 (S106).

The user selects "10:52" as the second character string from among the follow-up candidates displayed on the candidate display 22. The detector 30 detects that "10:52" was selected as the second character string, and notifies the follow-up candidate acquisition unit 42. The follow-up candidate acquisition unit 42 deletes the temporarily saved follow-up candidates (S107).

Next, the user inputs the remaining desired character string " 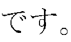 " (S108). The detector 30 detects that character input to the input field 200 has been finalized (completed). The detector 30 notifies the display controller 35 that character input to the input field 200 has been completed, so as to close the character input unit 21 and the candidate display 22. The display 20 closes the character input unit 21 and the candidate display 22 (S109).

If it is determined that a character string having one or more follow-up candidates was not input (S103: No), the follow-up candidate acquisition unit 42 notifies the detector 30. The user executes step S108 for continuing normal character input.

If it is determined that a character string having one or more follow-up candidates was not selected (confirmed) as the first character string (S105: No), the detector 30 notifies the follow-up candidate acquisition unit 42. The follow-up candidate acquisition unit 42 executes step S107 for deleting the temporarily saved follow-up candidates.

Using the configuration described above enables the user to acquire follow-up candidates simply by inputting the first character string " 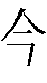 ". Therefore, the user is able to omit the procedure of inputting a character string in order to display follow-up candidates. That is, the troublesome nature of character input is resolved, enabling the user to input text efficiently, and improving user friendliness.

In the above-described configuration, the follow-up candidate acquisition unit 42 temporarily saves follow-up candidates prior to the character string " 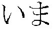 " being confirmed. However, a configuration may be adopted in which follow-up candidates are acquired after the first character string " 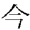 " has been confirmed.

Also, description was given taking the single character string " 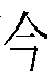 " as an example of the first character string. However, a configuration may be adopted in which the first character string is constituted by a plurality of character strings. In this case, as described above, the follow-up candidate acquisition unit 42 divides the first character string into units of words by implementing morphological analysis of the first character string. Furthermore, the follow-up candidate acquisition unit 42 may be configured to acquire follow-up candidates for each of the resultant character strings.

Note that, in the above-described configuration, time was given as an example. However, a configuration may be adopted in which not only time but also date, weather, temperature, season and the like are acquired as follow-up candidates. In other words, a configuration may be adopted in which any character strings representing the current state can be acquired as follow-up candidates.

Note that, in the above configuration, an example was described in which the follow-up candidates that were temporarily saved are deleted. However, a configuration may be adopted in which character strings that will possibly be used repeatedly (e.g., date, weather, etc.) remain in cache or the like for a certain period of time. In the case of date, for example, data saved in cache or the like may be deleted every time the system date of the electronic device is updated.

On the other hand, time and other such follow-up candidates that require application and immediacy such as shown in the above examples may be deleted when the second character string is confirmed. Unnecessary data can thereby be deleted, enabling the amount of data temporarily stored in cache or the like to be reduced.

### 4. First Modification

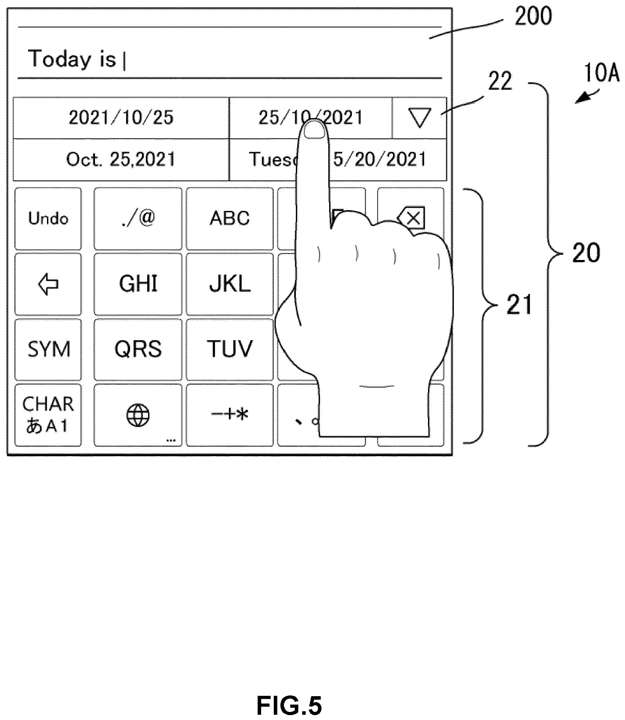

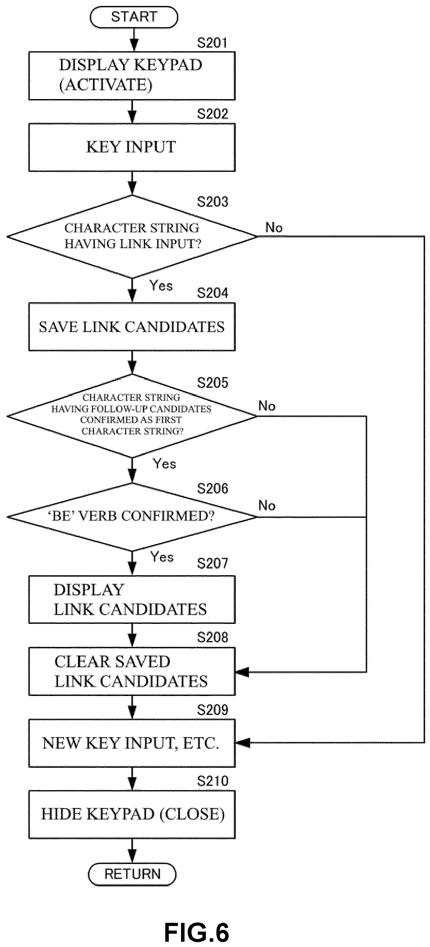

Next, the character input device according to a first modification will be described with reference to the diagrams. FIG. 5 is an image diagram illustrating character input with a character input device 10A of the first modification. FIG. 6 is a flowchart showing the flow of processing by the character input device 10A of the first modification.

As shown in FIG. 5, the character input device 10A according to the first modification differs in that the input mode of the character input unit 21 of the character input device 10 according to the configuration example is a kana input mode, whereas, in the first modification, the input mode of the character input unit 21 is an alphabetic character input mode. The remaining configuration of the character input device 10Ais similar to the character input device 10, and description of similar parts will be omitted. The character input unit 21 in FIG. 6 is in keypad layout, that is, 4 rows by 3 columns giving 12 keys in total, but may be in QWERTY keyboard layout.

Note that, hereinafter, an example in which the character input unit 21 is in the alphabetic character input mode will be described. However, the type of language that is input as character strings in the alphabetic character input mode is not limited to English and may be another language. The language may, for example, be Chinese, which involves the user inputting the phonetic transcription of the word (desired character string) he or she wants to input as a character string, or German, which involves the user inputting the spelling of the word he or she wants to input as a character string.

The following describes an example in which the user inputs "Today is 5/20/2021" to the input field 200. The user activates the input field 200 of the email app and inputs the character string "Today". The detector 30 detects that the character string "Today" has been input, and outputs the character string "Today" to the conversion candidate acquisition unit 41.

The conversion candidate acquisition unit 41 searches the dictionary database 50 for the character string "Today". The conversion candidate acquisition unit 41 acquires "Today", "Today's", "TODAY" and the like (hereinafter, "conversion candidates") as conversion candidates corresponding to the character string "Today". The conversion candidate acquisition unit 41 outputs the conversion candidates to the detector 30 and the follow-up candidate acquisition unit 42.

The detector 30 outputs the conversion candidates "Today", "Today's", "TODAY" and the like to the display controller 35. The display controller 35 displays the conversion candidates on the candidate display 22.

The follow-up candidate acquisition unit 42 estimates whether there is a character string having one or more follow-up candidates among the conversion candidates. At this time, the follow-up candidate acquisition unit 42 estimates that "Today" is a character string having one or more follow-up candidates.

The follow-up candidate acquisition unit 42 acquires follow-up candidates for the character string "Today". The follow-up candidate acquisition unit 42 recognizes that "Today" is a character string expressing the date, and acquires today's date. The acquired date may be the system date of the smartphone 80, the date acquired from an Internet server, or the like. In this case, the follow-up candidate acquisition unit 42 acquires "2021/10/25", "25/10/2021", "Oct. 25, 2021", "Tuesday 25/10/2021" and the like as follow-up candidates for the first character string "Today". The follow-up candidate acquisition unit 42 temporarily saves the follow-up candidates to cache or the like, for example.

The user selects "Today" displayed on the candidate display 22 as the first character string. The detector 30 notifies this selection to the confirmation unit 60 and the follow-up candidate acquisition unit 42. The confirmation unit 60 outputs the first character string "Today" in the input field 200 as a confirmed character string.

Next, the user inputs the 'be' verb "is" to the input field 200 following the first character string "Today" and confirms the input. The detector 30 detects that input of the 'be' verb "is" has been confirmed. The detector 30 notifies this confirmation to the follow-up candidate acquisition unit 42.

The follow-up candidate acquisition unit 42 recognizes that "Today" having one or more follow-up candidates was selected as the first character string and that input of the 'be' verb "is" has been confirmed. The follow-up candidate acquisition unit 42 notifies this selection to the connecting candidate acquisition unit 42. The follow-up candidate acquisition unit 42 acquires the temporarily saved follow-up candidates "2021/10/25", "25/10/2021", "Oct. 25, 2021", "Tuesday 25/10/2021" and the like of the first character string "Today", and outputs these follow-up candidates to the display controller 35.

The display controller 35 displays the follow-up candidates on the candidate display 22. The user selects "25/10/2021" as the second character string from among the follow-up candidates displayed on the candidate display 22.

The detector 30 detects that "25/10/2021" was selected as the second character string, and notifies the follow-up candidate acquisition unit 42 and the confirmation unit 60. The follow-up candidate acquisition unit 42 deletes the temporarily saved follow-up candidates. The confirmation unit 60 outputs the second character string "25/10/2021" in the input field 200 as a confirmed character string.

FIG. 6 is a flowchart showing the flow of processing by the character input device 10A in an operation example. The flow of processing by the character input device 10A will be described using FIGS. 5 and 6.

The user starts the email app that is installed on the smartphone 80. The user taps the input field 200. The detector 30 notifies the display controller 35 that the input field 200 has been activated, so as to start the display 20. The display 20 displays the character input unit 21 and the candidate display 22 (S201).

The input field 200 receives input of a character string by the user. The user inputs "Today" as the first character string, for example, using the character input unit 21 (S202).

The conversion candidate acquisition unit 41 searches the dictionary database 50 for the character string "Today" and retrieves conversion candidates. The conversion candidate acquisition unit 41 outputs the conversion candidates to the detector 30 and the follow-up candidate acquisition unit 42.

The detector 30 outputs the conversion candidates to the display controller 35. The display controller 35 displays the conversion candidates on the candidate display 22. Also, the follow-up candidate acquisition unit 42 estimates whether there is a character string having one or more follow-up candidates among the conversion candidates (S203).

If it is determined that the character string "Today" has one or more follow-up candidates (S203: Yes), the follow-up candidate acquisition unit 42 searches for follow-up candidates for the character string "Today". In this case, the follow-up candidate acquisition unit 42 acquires "2021/10/25", "25/10/2021", "Oct. 25, 2021", "Tuesday 25/10/2021" and the like as follow-up candidates for "Today". The follow-up candidate acquisition unit 42 temporarily saves these follow-up candidates to cache or the like, for example (S204).

The user selects a desired character string from among the conversion candidates displayed on the candidate display 22. The detector 30 detects whether "Today" having one or more follow-up candidates was selected as the first character string (S205). If it is detected that "Today" was selected (confirmed) as the first character string (S205: Yes), the detector 30 notifies the follow-up candidate acquisition unit 42 and the confirmation unit 60. The detector 30 detects whether a 'be' verb has been input to the input field 200 (S206).

If it is confirmed that the 'be' verb "is" has been input to the input field 200 (S206: Yes), the detector 30 notifies the follow-up candidate acquisition unit 42 and the confirmation unit 60 that input of the 'be' verb "is" has been confirmed. The follow-up candidate acquisition unit 42 acquires the temporarily saved follow-up candidates of the first character string "Today", and outputs these follow-up candidates to the display controller 35. The display controller 35 displays the follow-up candidates on the candidate display 22 (S207).

The user selects "25/10/2021" as the second character string from among the follow-up candidates displayed on the candidate display 22. The detector 30 detects that "25/10/2021" was selected as the second character string, and notifies the follow-up candidate acquisition unit 42. The follow-up candidate acquisition unit 42 deletes the temporarily saved follow-up candidates (S208).

Next, the user inputs the remaining desired character string "." (period) (S209). The detector 30 detects that character input to the input field 200 has been finalized (completed), and notifies the display controller 35 so as to close the character input unit 21 and the candidate display 22. The display 20 closes the character input unit 21 and the candidate display 22 (S210).

If it is determined that a character string having one or more follow-up candidates was not input (S203: No), the character input device 10 does not execute the subsequent processing. The user executes step S209 for continuing normal character input.

If it is determined that a character string having one or more follow-up candidates was not selected (confirmed) as the first character string (S205: No), the follow-up candidate acquisition unit 42 deletes the temporarily saved follow-up candidates (executes the processing of step S208). The user then executes step S209 for continuing normal character input.

If the 'be' verb "is" has not been input (S206: No), the detector 30 notifies the follow-up candidate acquisition unit 42. The follow-up candidate acquisition unit 42 deletes the temporarily saved follow-up candidates (executes the processing of step S208). The user then executes step S209 for continuing normal character input.

In this way, the user is similarly able to acquire follow-up candidates for the first character string with alphabetic character input. That is, the user is able to omit the procedure of inputting a second character string in order to display follow-up candidates. The troublesome nature of character input is thus resolved, enabling the user to input text efficiently, and improving user friendliness.

### 5. Second Modification

The character input device shown in the above examples may be configured to further acquire follow-up candidates for the follow-up candidates that have currently been acquired.

For example, the user inputs the sentence "Just now at 10:52 work was completed" in an email or the like. At this time, the user first inputs the character string "Just" to the input field 200. The follow-up candidate acquisition unit 42 acquires "right", "now", "before" and the like as follow-up candidates for the character string "just". As a result, these follow-up candidates are displayed on the candidate display 22.

The user selects "now" as the first character string from among the follow-up candidates displayed on the candidate display 22. The detector 30 detects that "now" was selected as the first character string, and notifies the follow-up candidate acquisition unit 42 and the confirmation unit 60. The confirmation unit 60 outputs the first character string "now" in the input field 200 as a confirmed character string. Next, the user inputs the character string "at" that follows the input character string "Just" and first character string "now".

Furthermore, the follow-up candidate acquisition unit 42 acquires "1052 hrs", "10:52 AM", "10:52", "10:52 a.m." and the like as follow-up candidates for the first character string "now", and temporarily saves these follow-up candidates to cache or the like, for example. The user selects the follow-up candidate "10:52" displayed on the candidate display 22 as the second character string. The detector 30 notifies this selection to the follow-up candidate acquisition unit 42 and the confirmation unit 60. The confirmation unit 60 outputs the second character string "10:52" in the input field 200 as a confirmed character string.

The follow-up candidate acquisition unit 42 deletes the temporarily saved follow-up candidates for the first character string. Thereafter, the user inputs the remaining character strings "work was completed."

Adopting such a configuration enables the user to acquire follow-up candidates that conceivably further follow on from the follow-up candidates that have currently been acquired. That is, the troublesome nature of character input is resolved, enabling the user to input text efficiently, and improving user friendliness.

Note that this invention is not limited to the above examples in their current form, and can be embodied by modifying the constituent elements at the implementation stage without departing from spirit thereof. Also, various modes of the invention can be formed by appropriately combining the constituent elements that are disclosed in the above examples. For example, one or more of the constituent elements shown in the above examples may be deleted. Furthermore, constituent elements spanning different examples may be appropriately combined.

Furthermore, the correspondence between the configuration according to this invention and the above-described configurations can be represented as in the following supplementary note.

### Supplementary Note

A character input device (10) includes a conversion candidate acquisition unit (41) that acquires one or more conversion candidates for a character string input to the character input device, a detector (30) that detects selection of a conversion candidate acquired by the conversion candidate acquisition unit (41), a confirmation unit (60) that confirms, as a first character string of the input character string, the conversion candidate whose selection is detected by the detector (30), and a follow-up candidate acquisition unit (42) that acquires one or more follow-up candidates that follow the first character string confirmed by the confirmation unit (60). The follow-up candidate acquisition unit (42) acquires, as the one or more follow-up candidates, a character string or strings representing a state of an event related to the confirmed first character string. The detector (30) receives selection of a follow-up candidate acquired by the follow-up candidate acquisition unit (42). The confirmation unit (60) confirms, as a new second character string that has continuity with the first character string last confirmed, the follow-up candidate whose selection is received by the detector (30).

### LIST OF REFERENCE NUMERALS

- 10, 10A: Character input device
- 20: Display
- 21: Character input unit
- 22: Candidate display
- 30: Detector
- 35: Display controller
- 40: Controller
- 41: Conversion candidate acquisition unit
- 42: Follow-up candidate acquisition unit
- 50: Dictionary database
- 60: Confirmation unit
- 80: Smartphone
- 200: Input field

## Claims

1. A character input device (10) comprising:
a conversion candidate acquisition unit (41) configured to acquire one or more conversion candidates for a character string that is input to the character input device (10);
a detector (30) configured to detect selection of a conversion candidate acquired by the conversion candidate acquisition unit (41);
a confirmation unit (60) configured to confirm, as a first character string of the input character string, the conversion candidate whose selection is detected by the detector (30); and
a follow-up candidate acquisition unit (42) configured to acquire one or more follow-up candidates that follow the first character string confirmed by the confirmation unit,
wherein the follow-up candidate acquisition unit (42) acquires, as the one or more follow-up candidates, a character string or strings representing a state of an event related to the confirmed first character string,
the detector (30) receives selection of a follow-up candidate acquired by the follow-up candidate acquisition unit (42), and
the confirmation unit (60) confirms, as a new second character string that has continuity with the first character string last confirmed, the follow-up candidate whose selection is received by the detector (30).

2. The character input device (10) according to claim 1,
wherein the follow-up candidate acquisition unit (42) searches for and acquires one or more follow-up candidates that respectively follow the one or more conversion candidates acquired by the conversion candidate acquisition unit (41).

3. The character input device (10) according to claim 1,
wherein the follow-up candidate acquisition unit (42) searches for and acquires, for the conversion candidate confirmed as the first character string or for the follow-up candidate confirmed as the second character string, one or more follow-up candidates that follow the first character string or the second character string.

4. The character input device (10) according to any one of claims 1 to 3,
wherein the follow-up candidate acquisition unit (42) acquires, for each conversion candidate acquired by the conversion candidate acquisition unit (41), one or more follow-up candidates to be acquired in a case where selection of the conversion candidate is detected by the detector (30).

5. The character input device (10) according to any one of claims 1 to 4,
wherein the follow-up candidate acquisition unit (42) acquires, for each follow-up candidate currently acquired, one or more follow-up candidates to be acquired in a case where selection of the follow-up candidate is received by the detector (30).

6. A character input method in which a computer executes:
a first step of acquiring one or more conversion candidates for a character string that is input;
a second step of receiving selection of a conversion candidate acquired in the first step;
a third step of confirming, as a first character string of the input character string, the conversion candidate whose selection is received in the second step; and
a fourth step of acquiring one or more follow-up candidates that follow the first character string confirmed in the third step,
wherein, in the fourth step, a character string or strings representing a state of an event related to the confirmed first character string is acquired as the one or more follow-up candidates,
in the second step, selection of a follow-up candidate acquired in the fourth step is received, and
in the third step, the follow-up candidate whose selection is received in the second step is confirmed as a new second character string that has continuity with the first character string last confirmed.

7. A character input program for causing a computer to execute:
a first step of acquiring one or more conversion candidates for a character string that is input;
a second step of receiving selection of a conversion candidate acquired in the first step;
a third step of confirming, as a first character string of the input character string, the conversion candidate whose selection is received in the second step; and
a fourth step of acquiring one or more follow-up candidates that follow the first character string confirmed in the third step,
wherein, in the fourth step, a character string or strings representing a state of an event related to the confirmed first character string is acquired as the one or more follow-up candidates,
in the second step, selection of a follow-up candidate acquired in the fourth step is received, and
in the third step, the follow-up candidate whose selection is received in the second step is confirmed as a new second character string that has continuity with the first character string last confirmed.
